# EUROPÄISCHE PATENTANMELDUNG

(11) **EP 4 389 386 A1**
(43) Veröffentlichungstag der Anmeldung: **26.06.2024**
(21) Anmeldenummer: 23215783.4
(22) Anmeldetag: 12.12.2023
(51) Int. Cl.: B29C 45/00

(54) **VERFAHREN ZUR HERSTELLUNG EINES WENIGSTENS ZWEI FARBSCHICHTEN AUFWEISENDEN BAUTEILS FÜR EIN KRAFTFAHRZEUG**

(30) Priorität: 20.12.2022 DE 102022134148
(71) Anmelder: REHAU Automotive SE & Co. KG, 95111 Rehau (DE)
(72) Erfinder: Reichstein, Johann, 95448 Bayreuth (DE); Rothe, Marco, 95111 Rehau (DE); Klein, Thomas, 85055 Ingolstadt (DE); Pickl, Richard, 85095 Denkendorf (DE)

(57) **Zusammenfassung**

Die Erfindung betrifft ein Verfahren zur Herstellung eines wenigstens eine Farbschicht (1) aufweisenden Bauteils für ein Kraftfahrzeug, wobei die Farbschicht (1) auf einem dünnwandigen, die Geometrie des Bauteils zumindest teilweise definierenden Grundbauteil (2) aufgebracht wird, wobei das Grundbauteil (2) eine in der bestimmungsgemäßen Verwendung sichtbare Außenseite (A) und eine der Außenseite (A) gegenüberliegende Rückseite aufweist, wobei das Grundbauteil (2) mittels eines Spitzgussverfahrens in einem Spritzgusswerkzeug (3) urgeformt wird, wobei das Spritzgusswerkzeug (3) wenigstens zwei Werkzeugformhälften (3a, 3b) aufweist, die im geschlossenen Zustand zwischen sich eine das Grundbauteil (2) definierende Kavität (4) bilden, wobei das Verfahren folgende Schrittreihenfolge aufweist: Urformen des Grundbauteils (2) durch Einbringen wenigstens eines das Grundbauteil (2) bildenden Kunststoffmaterials (K) in die Kavität (4), Verfestigen des Kunststoffmaterials (K), teilweises oder vollständiges Öffnen der Werkzeughälften (3a, 3b), sodass zumindest ein Teilbereich (5) der Oberfläche des urgeformten Grundbauteils (2) frei zugänglich wird, wobei das Grundbauteil (2) hierbei weiterhin von wenigstens einer der Werkzeugformhälften (3a) und/oder von wenigstens einem, in wenigstens einer der Werkzeugformhälften (3a) integrierten, Auswerfer lagefixiert wird, Aufbringen der Farbschicht (1) auf den Teilbereich (5) des Grundbauteils (2) mittels wenigstens eines Tintenstrahldruckerkopfs (10), der zur Ausbildung der Farbschicht (1) wenigstens eine flüssige oder pulverförmige Pigmenttinte oder wenigstens eine flüssige oder pulverförmige Farbstofftinte auf den Teilbereich (5) aufbringt, vollständiges Entformen und entnehmen des Grundbauteils (2) aus dem Spritzgusswerkzeug.

## Beschreibung

Die vorliegende Erfindung betrifft ein Verfahren zur Herstellung eines wenigstens eine Farbschicht aufweisenden Bauteils für ein Kraftfahrzeug, wobei die Farbschicht auf einem dünnwandigen, die Geometrie des Bauteils zumindest teilweise definierenden Grundbauteil aufgebracht wird, wobei das Grundbauteil eine in der bestimmungsgemäßen Verwendung sichtbare Außenseite und eine der Außenseite gegenüberliegende Rückseite aufweist, wobei das Grundbauteil mittels eines Spitzgussverfahrens in einem Spritzgusswerkzeug urgeformt wird, wobei das Spritzgusswerkzeug wenigstens zwei Werkzeugformhälften aufweist, die im geschlossenen Zustand zwischen sich eine das Grundbauteil definierende Kavität bilden.

Bei aus dem Stand der Technik bekannten Verfahren erfolgt das Aufbringen der Farbschichten auf dem Grundbauteil, nachdem dieses in einem Spritzgussverfahren hergestellt wurde. Hierfür muss das Grundbauteil in zusätzlichen Verfahrensschritten wieder in Lackiergestellen aufgenommen und Lackierstraßen zugeführt werden.

Diese zusätzlichen Verfahrensschritten sind jedoch zeitaufwendig und daher kostenintensiv.

Die Erfindung stellt sich daher die Aufgabe ein Verfahren mit den eingangs beschriebenen Merkmalen anzugeben, das gegenüber dem Stand der Technik die schnellere und kostengünstigere Herstellung eines wenigstens eine Farbschicht aufweisenden Bauteils für ein Kraftfahrzeug ermöglicht.

Erfindungsgemäß wird diese Aufgabe durch folgendes Verfahren gelöst:
Verfahren zur Herstellung eines wenigstens eine Farbschicht aufweisenden Bauteils für ein Kraftfahrzeug, wobei die Farbschicht auf einem dünnwandigen, die Geometrie des Bauteils zumindest teilweise definierenden Grundbauteil aufgebracht wird, wobei das Grundbauteil eine in der bestimmungsgemäßen Verwendung sichtbare Außenseite und eine der Außenseite gegenüberliegende Rückseite aufweist, wobei das Grundbauteil mittels eines Spitzgussverfahrens in einem Spritzgusswerkzeug urgeformt wird, wobei das Spritzgusswerkzeug wenigstens zwei Werkzeugformhälften aufweist, die im geschlossenen Zustand zwischen sich eine das Grundbauteil definierende Kavität bilden, wobei das Verfahren folgende Schrittreihenfolge aufweist:
- Urformen des Grundbauteils durch Einbringen wenigstens eines das Grundbauteil bildenden Kunststoffmaterials in die Kavität,
- Verfestigen des Kunststoffmaterials,
- teilweises oder vollständiges Öffnen der Werkzeughälften, sodass zumindest ein Teilbereich der Oberfläche des urgeformten Grundbauteils frei zugänglich wird, wobei das Grundbauteil hierbei weiterhin von wenigstens einer der Werkzeugformhälften und/oder von wenigstens einem, in wenigstens einer der Werkzeugformhälften integrierten, Auswerfer lagefixiert wird,
- Aufbringen der Farbschicht auf den Teilbereich des Grundbauteils mittels wenigstens eines Tintenstrahldruckerkopfs, der zur Ausbildung der Farbschicht wenigstens eine flüssige oder pulverförmige Pigmenttinte oder wenigstens eine flüssige oder pulverförmige Farbstofftinte auf den Teilbereich aufbringt,
- vollständiges Entformen und entnehmen des Grundbauteils aus dem Spritzgusswerkzeug.

Die Verwendung eines Tintenstrahldruckerkopfs, und somit eines Tintenstrahldruckverfahrens, für das Aufbringen der Farbschicht auf das Grundbauteil ermöglicht es diesen Verfahrensschritt in den Prozessablauf des Spritzgießens zu integrieren. Dies ist insbesondere auf die geringen Abmessungen eines derartigen Tintenstrahldruckerkopfs zurückzuführen.

Der Tintenstrahldruckerkopf kann während des Aufbringens der Farbschicht über den Teilbereich des Grundbauteils bewegt werden.

Der Tintenstrahldruckerkopf kann mittels eines Manipulators (z.B. mittels eines Roboters oder einer linearen Verfahreinheit) vor den Teilbereich des Grundbauteils gefahren und dort in allen Raumrichtungen bewegt werden.

Der Abstand des Tintenstrahldruckerkopfs von dem Teilbereich des Grundbauteils liegt beim Aufbringen der Farbschicht bevorzugt zwischen 3 mm und 50 mm.

Parallel zu oder nach dem Schritt des Aufbringens der Farbschicht kann ein zeitgleiches oder nachfolgendes Aushärten und/oder Verfestigen der Farbschicht vorgesehen werden, wobei das Aushärten und/oder Verfestigen partiell oder vollständig erfolgt, wobei das Aushärten und/oder Verfestigen insbesondere durch eine zusätzliche Energiezufuhr ermöglicht und/oder beschleunigt wird.

Es können insbesondere UV härtende Lacke (also Lacke die durch ultraviolettes Licht aushärten) als Basis für die flüssige Pigmenttinte oder die flüssige Farbstofftinte verwendet werden. Bevorzugt ist in diesem Fall wenigstens eine UV-Lichtquelle mit dem Tintenstahldruckkopf gekoppelt. Weiter bevorzugt befindet sich in jeder Bewegungsrichtung (insbesondere in der Vor- und Rückwärtsrichtung) des Tintenstrahldruckkopfes eine in der jeweiligen Bewegungsrichtung vorlaufend angeordnete UV-Lichtquelle an dem Tintenstrahldruckkopf.

Die Farbschicht wird bevorzugt mit wenigsten 100 dpi, bevorzugt mit wenigstens 200 dpi, weiter bevorzugt mit wenigsten 300 dpi aufgebracht. Wobei dpi die Punktdichte "dots per inch" bedeutet.

Die Farbschicht kann in sich durch eine Vielzahl von Einzelschichten aufgebaut werden oder aufgebaut sein. Das heißt die Farbschicht kann insbesondere aus wenigstens zwei oder mehr Einzelschichten aufgebaut sein.

Die Farbschicht kann in mehreren, nebeneinanderliegenden Bahnen aufgebracht werden. Die Farbschicht muss folglich nicht zwingend in einem Durchlauf auf die Trägerstruktur aufgebracht werden, sondern kann auch in mehreren Bahnen aufgebracht werden. Die nebeneinanderliegenden Bahnen können sich hierbei auch in ihren Randbereichen überlappen. Die Bahnen können bevorzugt eine Breite zwischen 5 mm bis 300 mm aufweisen.

Die Farbschicht kann in mehreren, sich in der Zusammensetzung der Farbschicht unterscheidenden Teilabschnitten aufgebracht werden.

Dass wenigstens eine Kunststoffmaterial des Grundbauteils kann ein transparentes oder transluzentes Polymermaterial umfassen, insbesondere Polycarbonat (PC), oder Polypropylen (PP) oder Polymethylmethacrylat (PMMA) oder Acrylnitril-Butadien-Styrol-Copolymer (ABS) oder Polycarbonat - Acrylnitril-Butadien-Styrol - Copolymere (PC-ABS Copolymere) umfassen.

Beim Schritt des Urformens des Grundbauteils kann wenigstens ein weiteres Kunststoffmaterial in die Kavität eingebracht werden, welches zusammen mit dem wenigstens einen Kunststoffmaterial das Grundbauteil bildet. Das weitere Kunststoffmaterial kann beispielsweise ein Montage-, oder Befestigungs-, oder Dichtungselement ausbilden.

Nach dem Schritt des Aufbringens der Farbschicht können die Werkzeugformhälften wieder um das mit der Farbschicht versehene Grundbauteil herum geschlossen und nachfolgend ein Versiegelungsmaterial, insbesondere Polyurea oder Polyurethan umfassendes Versiegelungsmaterial, auf der Farbschicht und/oder dem Grundbauteil angeordnet werden. Hierfür werden die Werkzeugformhälften nicht vollständig geschlossen, sodass sich ein Zwischenraum zwischen einer der Werkzeugformhälften und dem Grundbauteil bildet, der mit dem Versiegelungsmaterial gefüllt wird.

Nach dem Schritt des Aufbringens der Farbschicht kann eine der Werkzeugformhälften zusammen mit einer Wechselwerkzeugformhälfte um das mit der Farbschicht versehene Grundbauteil herum geschlossen und nachfolgend ein Versiegelungsmaterial, insbesondere Polyurea oder Polyurethan umfassendes Versiegelungsmaterial, auf der Farbschicht und/oder dem Grundbauteil angeordnet werden.

Beim Schritt des Urformens des Grundbauteils kann wenigstens ein in der Kavität angeordnetes Einlegeteil von dem Kunststoffmaterial hinterspritzt, umspritzt oder überspritzt werden. Das Einlegeteil kann eine Dekorfolie und/oder eine Funktionsfolie sein. Im Fall einer Funktionsfolie kann die Funktionsfolie wenigstens einen Heizdraht oder wenigstens einen Antennendraht oder wenigstens eine elektrische Schaltung oder wenigstens eine Leuchtdiode aufweisen.

Das Bauteil kann ein Exterieur-Bauteil eines Kraftfahrzeuges, insbesondere eine Stoßfängerverkleidung oder eine Kühlergrillverkleidung oder eine Kotflügelverkleidung oder eine A-, B-, C-, oder D-Säulenverkleidung oder eine Spoileraußenhaut oder eine Schwellerverkleidung oder eine Türaußenverkleidung oder eine Türklappenaußenverkleidung sein.

Das Bauteil kann einen Bestandteil eines Exterieur-Bauteils eines Kraftfahrzeuges, insbesondere einen Bestandteil einer Stoßfängerverkleidung oder einer Kühlergrillverkleidung oder einer Kotflügelverkleidung oder einer A-, B-, C-, oder D-Säulenverkleidung oder einer Spoileraußenhaut oder einer Schwellerverkleidung oder einer Türaußenverkleidung oder einer Türklappenaußenverkleidung bilden.

Weiterhin Teil der Erfindung ist ein Bauteil das mit dem vorstehend beschriebenen Verfahren hergestellt ist.

Im Folgenden wird die Erfindung anhand lediglich Ausführungsbeispiele darstellender Zeichnungen erläutert. Es zeigen schematisch:
- Fig. 1 und 2: Verfahrensschritt des Urformens des Grundbauteils;
- Fig. 3: Verfahrensschritt des Öffnens der Werkzeughälften;
- Fig. 4: Verfahrensschritt des Aufbringens der Farbschicht;
- Fig. 5: Verfahrensschritt des Entformens des Grundbauteils;
- Fig. 6: Farbschicht aufweisendes Bauteil;
- Fig. 7 und 8: eine Variante des Verfahrens.

In den Figuren werden gleiche oder funktionsgleiche Elemente mit den gleichen Bezugszeichen versehen.

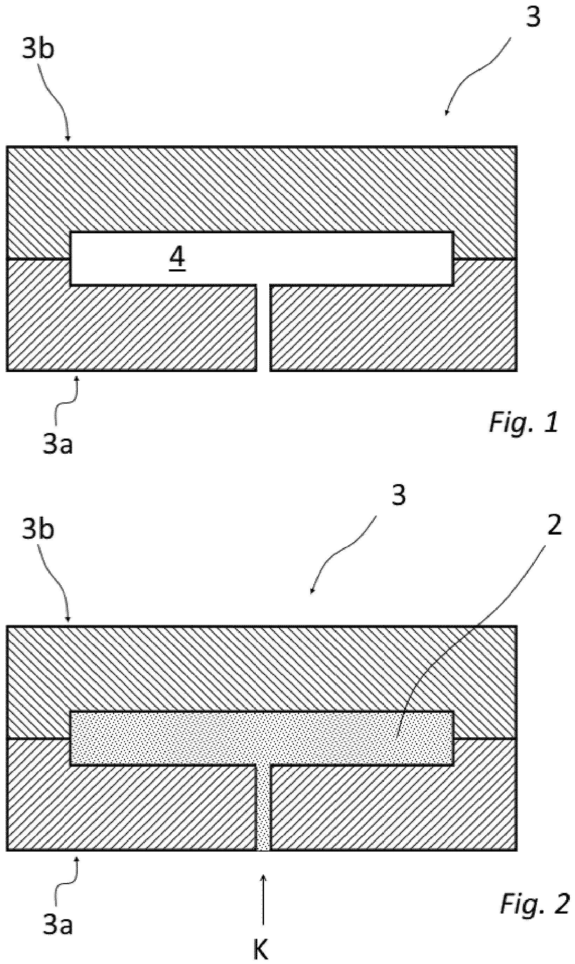

In den Fig. 1 bis 5 wird ein Verfahren zur Herstellung eines wenigstens eine Farbschicht 1 aufweisenden Bauteils für ein Kraftfahrzeug beschrieben.

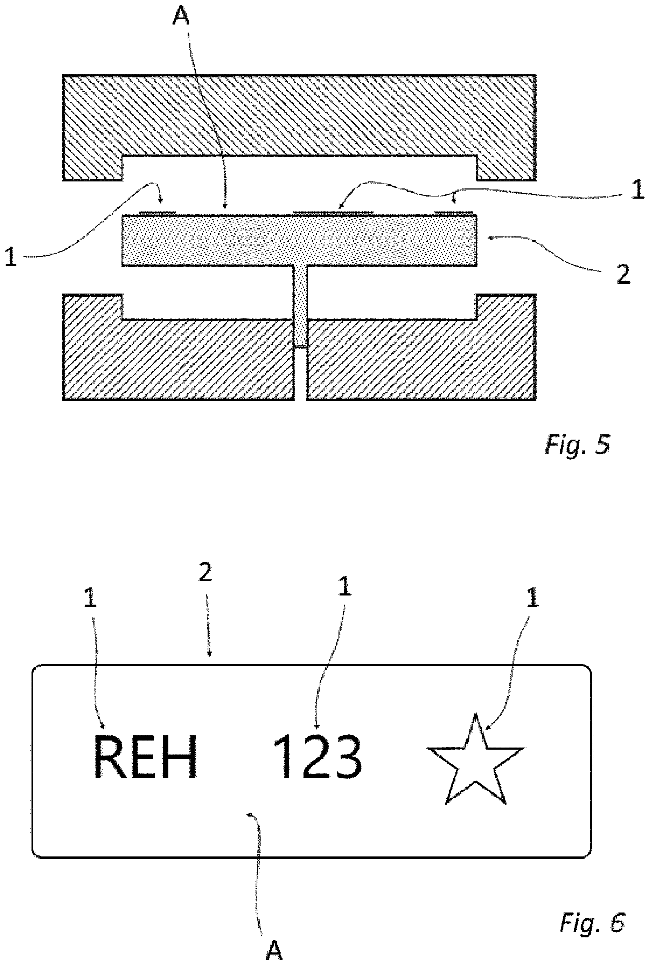

Die Farbschicht 1 wird auf einem dünnwandigen, die Geometrie des Bauteils zumindest teilweise definierenden Grundbauteil 2 aufgebracht. Das Grundbauteil 2 weist eine in der bestimmungsgemäßen Verwendung sichtbare Außenseite A und eine der Außenseite A gegenüberliegende Rückseite auf (vgl. Fig. 6).

Das Grundbauteil 2 wird mittels eines Spitzgussverfahrens in einem Spritzgusswerkzeug 3 urgeformt, wobei das Spritzgusswerkzeug 3 wenigstens zwei Werkzeugformhälften 3a, 3b aufweist, die im geschlossenen Zustand zwischen sich eine das Grundbauteil 2 definierende Kavität 4 bilden (vgl. Fig. 1).

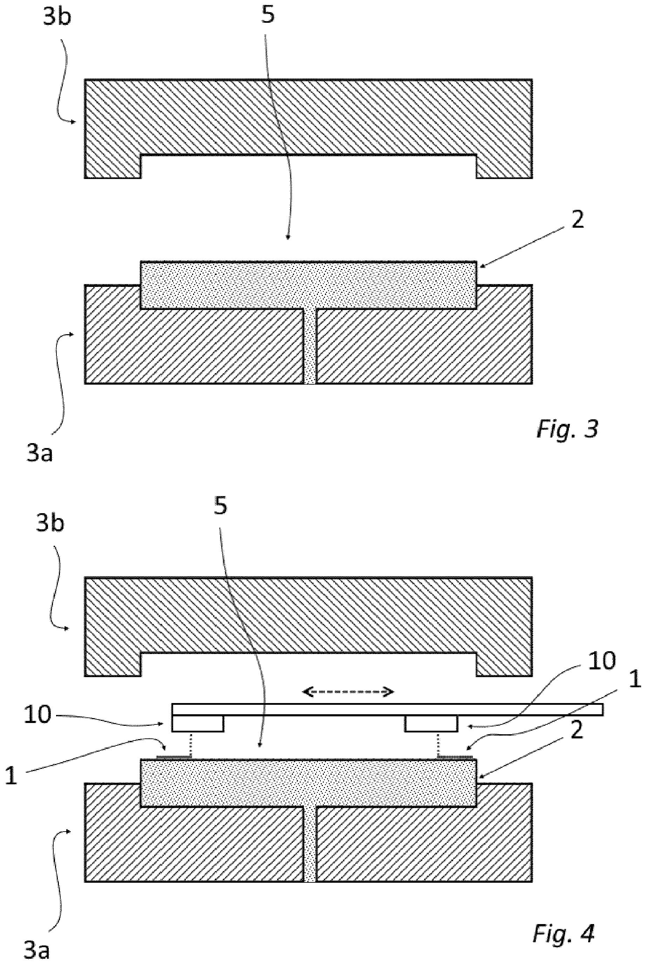

Das Verfahren weist folgende Schrittreihenfolge auf:
- Urformen des Grundbauteils 2 durch Einbringen wenigstens eines das Grundbauteil 2 bildenden Kunststoffmaterials K in die Kavität 4 (vgl. Fig. 2),
- Verfestigen des Kunststoffmaterials K (vgl. Fig. 2),
- teilweises oder vollständiges Öffnen der Werkzeughälften 3a, 3b, sodass zumindest ein Teilbereich 5 der Oberfläche des urgeformten Grundbauteils 2 frei zugänglich wird, wobei das Grundbauteil 2 hierbei weiterhin von wenigstens einer der Werkzeugformhälften 3a und/oder von wenigstens einem, in wenigstens einer der Werkzeugformhälften 3a integrierten, Auswerfer lagefixiert wird (vgl. Fig. 3),
- Aufbringen der Farbschicht 1 auf den Teilbereich 5 des Grundbauteils 2 mittels wenigstens eines Tintenstrahldruckerkopfs 10, der zur Ausbildung der Farbschicht 1 wenigstens eine flüssige oder pulverförmige Pigmenttinte oder wenigstens eine flüssige oder pulverförmige Farbstofftinte auf den Teilbereich 5 aufbringt (vgl. Fig. 4),
- vollständiges Entformen und entnehmen des Grundbauteils 2 aus dem Spritzgusswerkzeug 3 (vgl. Fig. 6).

Der Tintenstrahldruckerkopf wird während des Aufbringens der Farbschicht 1 über den Teilbereich 5 des Grundbauteils 2 bewegt (vgl. Fig. 4).

Parallel zu oder nach dem Schritt des Aufbringens der Farbschicht 1 kann als Variante ein zeitgleiches oder nachfolgendes Aushärten und/oder Verfestigen der Farbschicht 1 vorgesehen werden, wobei das Aushärten und/oder Verfestigen partiell oder vollständig erfolgt, wobei das Aushärten und/oder Verfestigen insbesondere durch eine zusätzliche Energiezufuhr ermöglicht und/oder beschleunigt wird.

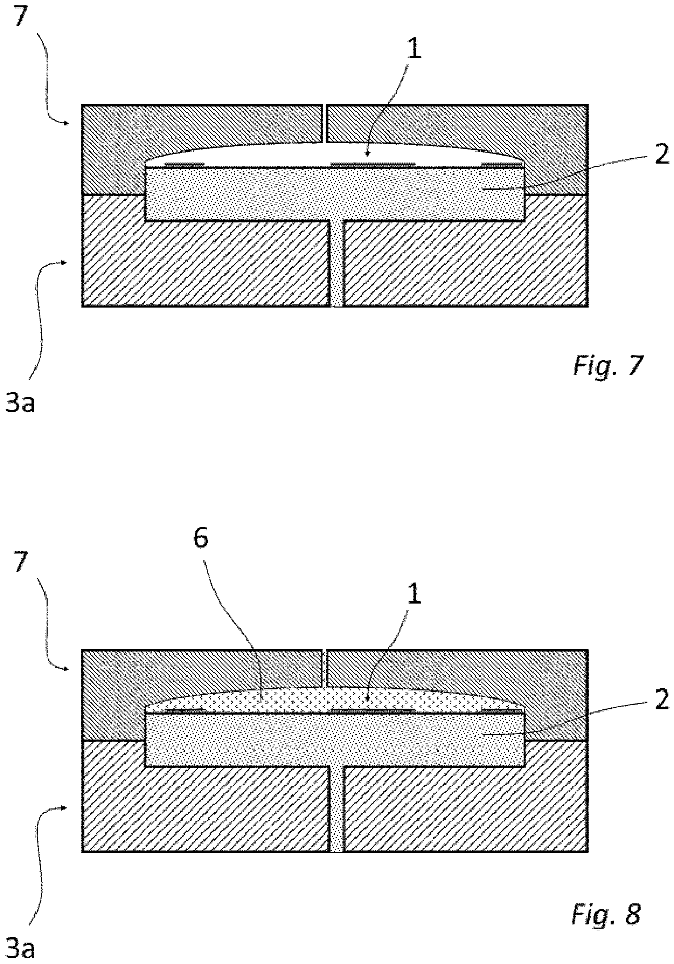

In der Fig. 7 und Fig. 8 ist als Variante dargestellt, dass nach dem Schritt des Aufbringens der Farbschicht 1 eine der Werkzeugformhälften 3a zusammen mit einer Wechselwerkzeugformhälfte 7 um das mit der Farbschicht 1 versehene Grundbauteil 2 herum geschlossen und nachfolgend ein Versiegelungsmaterial 6, insbesondere Polyurea oder Polyurethan umfassendes Versiegelungsmaterial, auf der Farbschicht 1 und/oder dem Grundbauteil 2 angeordnet wird.

Das wenigstens eine Kunststoffmaterial des Grundbauteils 2 umfasst ein transparentes oder transluzentes Polymermaterial, insbesondere Polycarbonat (PC), oder Polypropylen (PP) oder Polymethylmethacrylat (PMMA) oder Acrylnitril-Butadien-Styrol-Copolymer (ABS) oder Polycarbonat - Acrylnitril-Butadien-Styrol - Copolymere (PC-ABS Copolymere).

Als Variante des Verfahrens kann beim Schritt des Urformens des Grundbauteils 2 wenigstens ein weiteres Kunststoffmaterial in die Kavität eingebracht werden, welches zusammen mit dem wenigstens einen Kunststoffmaterial das Grundbauteil 2 bildet.

Beim Schritt des Urformens des Grundbauteils 2 kann als Variante wenigstens ein in der Kavität 4 angeordnetes Einlegeteil von dem Kunststoffmaterial hinterspritzt, umspritzt oder überspritzt werden. Das Einlegeteil kann eine Dekorfolie und/oder eine Funktionsfolie sein. Im Fall einer Funktionsfolie kann die Funktionsfolie wenigstens einen Heizdraht oder wenigstens einen Antennendraht oder wenigstens eine elektrische Schaltung oder wenigstens eine Leuchtdiode aufweisen.

Das Bauteil ist ein Exterieur-Bauteil eines Kraftfahrzeuges, insbesondere eine Stoßfängerverkleidung oder eine Kühlergrillverkleidung oder eine Kotflügelverkleidung oder eine A-, B-, C-, oder D-Säulenverkleidung oder eine Spoileraußenhaut oder eine Schwellerverkleidung oder eine Türaußenverkleidung oder eine Türklappenaußenverkleidung. ist, oder einen Bestandteil der vorgenannten Bauteile bildet.

Das Bauteil kann auch einen Bestandteil eines Exterieur-Bauteils eines Kraftfahrzeuges, insbesondere einen Bestandteil einer Stoßfängerverkleidung oder einer Kühlergrillverkleidung oder einer Kotflügelverkleidung oder einer A-, B-, C-, oder D-Säulenverkleidung oder einer Spoileraußenhaut oder einer Schwellerverkleidung oder einer Türaußenverkleidung oder einer Türklappenaußenverkleidung bilden.

## Patentansprüche

1. Verfahren zur Herstellung eines wenigstens eine Farbschicht (1) aufweisenden Bauteils für ein Kraftfahrzeug,
wobei die Farbschicht (1) auf einem dünnwandigen, die Geometrie des Bauteils zumindest teilweise definierenden Grundbauteil (2) aufgebracht wird,
wobei das Grundbauteil (2) eine in der bestimmungsgemäßen Verwendung sichtbare Außenseite (A) und eine der Außenseite (A) gegenüberliegende Rückseite aufweist,
wobei das Grundbauteil (2) mittels eines Spitzgussverfahrens in einem Spritzgusswerkzeug (3) urgeformt wird, wobei das Spritzgusswerkzeug (3) wenigstens zwei Werkzeugformhälften (3a, 3b) aufweist, die im geschlossenen Zustand zwischen sich eine das Grundbauteil (2) definierende Kavität (4) bilden,
**dadurch gekennzeichnet, dass**
das Verfahren folgende Schrittreihenfolge aufweist:
- Urformen des Grundbauteils (2) durch Einbringen wenigstens eines das Grundbauteil (2) bildenden Kunststoffmaterials (K) in die Kavität (4),
- Verfestigen des Kunststoffmaterials (K),
- teilweises oder vollständiges Öffnen der Werkzeughälften (3a, 3b), sodass zumindest ein Teilbereich (5) der Oberfläche des urgeformten Grundbauteils (2) frei zugänglich wird, wobei das Grundbauteil (2) hierbei weiterhin von wenigstens einer der Werkzeugformhälften (3a) und/oder von wenigstens einem, in wenigstens einer der Werkzeugformhälften (3a) integrierten, Auswerfer lagefixiert wird,
- Aufbringen der Farbschicht (1) auf den Teilbereich (5) des Grundbauteils (2) mittels wenigstens eines Tintenstrahldruckerkopfs (10), der zur Ausbildung der Farbschicht (1) wenigstens eine flüssige oder pulverförmige Pigmenttinte oder wenigstens eine flüssige oder pulverförmige Farbstofftinte auf den Teilbereich (5) aufbringt,
- vollständiges Entformen und entnehmen des Grundbauteils (2) aus dem Spritzgusswerkzeug (3).

2. Verfahren nach Anspruch 1, **dadurch gekennzeichnet, dass** parallel zu oder nach dem Schritt des Aufbringens der Farbschicht (1) ein zeitgleiches oder nachfolgendes Aushärten und/oder Verfestigen der Farbschicht (1) vorgesehen wird, wobei das Aushärten und/oder Verfestigen partiell oder vollständig erfolgt, wobei das Aushärten und/oder Verfestigen insbesondere durch eine zusätzliche Energiezufuhr ermöglicht und/oder beschleunigt wird.

3. Verfahren nach Anspruch 1 oder 2, **dadurch gekennzeichnet, dass** der Tintenstrahldruckerkopf während des Aufbringens der Farbschicht (1) über den Teilbereich (5) des Grundbauteils (2) bewegt wird.

4. Verfahren nach einem der vorstehenden Ansprüche, **dadurch gekennzeichnet, dass** das wenigstens eine Kunststoffmaterial des Grundbauteils (2) ein transparentes oder transluzentes Polymermaterial umfasst, insbesondere Polycarbonat (PC), oder Polypropylen (PP) oder Polymethylmethacrylat (PMMA) oder Acrylnitril-Butadien-Styrol-Copolymer (ABS) oder Polycarbonat - Acrylnitril-Butadien-Styrol - Copolymere (PC-ABS Copolymere) umfasst.

5. Verfahren nach einem der vorstehenden Ansprüche, **dadurch gekennzeichnet, dass** beim Schritt des Urformens des Grundbauteils (2) wenigstens ein weiteres Kunststoffmaterial in die Kavität eingebracht wird, welches zusammen mit dem wenigstens einen Kunststoffmaterial das Grundbauteil (2) bildet.

6. Verfahren nach einem der vorstehenden Ansprüche, **dadurch gekennzeichnet, dass** nach dem Schritt des Aufbringens der Farbschicht (1) die Werkzeugformhälften (3a, 3b) wieder um das mit der Farbschicht (1) versehene Grundbauteil (2) herum geschlossen und nachfolgend ein Versiegelungsmaterial (6), insbesondere Polyurea oder Polyurethan umfassendes Versiegelungsmaterial (6), auf der Farbschicht (1) und/oder dem Grundbauteil (2) angeordnet wird oder, dass nach dem Schritt des Aufbringens der Farbschicht (1) eine der Werkzeugformhälften (3a) zusammen mit einer Wechselwerkzeugformhälfte (7) um das mit der Farbschicht (1) versehene Grundbauteil (2) herum geschlossen und nachfolgend ein Versiegelungsmaterial (6), insbesondere Polyurea oder Polyurethan umfassendes Versiegelungsmaterial (6), auf der Farbschicht (1) und/oder dem Grundbauteil (2) angeordnet wird.

7. Verfahren nach einem der vorstehenden Ansprüche, **dadurch gekennzeichnet, dass** beim Schritt des Urformens des Grundbauteils (2) wenigstens ein in der Kavität (4) angeordnetes Einlegeteil von dem Kunststoffmaterial hinterspritzt, umspritzt oder überspritzt wird.

8. Verfahren nach Anspruch 7, **dadurch gekennzeichnet, dass** das Einlegeteil eine Dekorfolie und/oder eine Funktionsfolie ist.

9. Verfahren nach Anspruch 8, **dadurch gekennzeichnet, dass** die Funktionsfolie wenigstens einen Heizdraht oder wenigstens einen Antennendraht oder wenigstens eine elektrische Schaltung oder wenigstens eine Leuchtdiode aufweist.

10. Verfahren nach einem der vorstehenden Ansprüche, **dadurch gekennzeichnet, dass** das Bauteil ein Exterieur-Bauteil eines Kraftfahrzeuges, insbesondere eine Stoßfängerverkleidung oder eine Kühlergrillverkleidung oder eine Kotflügelverkleidung oder eine A-, B-, C-, oder D-Säulenverkleidung oder eine Spoileraußenhaut oder eine Schwellerverkleidung oder eine Türaußenverkleidung oder eine Türklappenaußenverkleidung ist, oder einen Bestandteil der vorgenannten Bauteile bildet.
